# EUROPEAN PATENT APPLICATION

(11) **EP 2 081 061 A1**
(43) Date of publication of application: **22.07.2009**
(21) Application number: 07829628.2
(22) Date of filing: 04.10.2007
(51) Int. Cl.: G02B 5/30, B42D 15/10, G02F 1/13, G07D 7/12

(54) **LATENT IMAGE FORMING FILM, LATENT IMAGE IDENTIFYING KIT AND METHOD OF LATENT IMAGE IDENTIFICATION**

(30) Priority: 07.11.2006 JP 2006301886
(71) Applicant: Nippon Oil Corporation, Tokyo 105-8412 (JP)
(72) Inventor: NISHIMURA, Suzushi, Yokohama-shi Kanagawa 231-0815 (JP); SUZAKI, Gorou, Yokohama-shi Kanagawa 231-0815 (JP)
(74) Representative: HOFFMANN EITLE
(86) International application number: PCT/JP2007/069890
(87) International publication number: WO 2008/056505

(57) **Abstract**

A latent image forming film comprising: a reflective layer; and a polarization converting and rotating layer placed on a surface of the reflective layer, the polarization converting and rotating layer changing an ellipticity of polarized incident light and concurrently rotating a polarization direction of the polarized incident light.

## Description

### Technical Field

The present invention relates to a latent image forming film, a latent image identifying kit and a method for identifying a latent image. More specifically, the present invention relates to a latent image forming film that is useful as an authentication medium for preventing forgery of objects, such as cards, gift certificates, tradable coupon, tickets, bills, passports, identification cards, securities and betting tickets of publicly-run events, and also relates to a latent image identifying kit and a method for identifying a latent image.

### Background of the Invention

Conventionally, as a method for preventing forgery of credit cards, certificates, tradable coupon, and the like, a method has been known in which an authentication medium that is difficult to forge is pasted on an object to be prevented from being forged, and then authenticity of the object is judged visually or mechanically. Holograms and liquid crystal films have been developed as such authentication media.

As techniques related to holograms, there are: a technique in which a holographic image of a character or an illustration is visually observed for judgment; a technique in which a holographic image of a numerical code or a specific pattern is mechanically recognized; a combination of these techniques; and the like. Such holographic images have been widely used because of the following reasons or other reasons. Specifically, the holographic images effectively prevent forgery because of impossibility of their duplication by an ordinary color copier or the like, are rich in design, and are difficult to produce. However, the forgery prevention effects of such holograms have been reduced since production of forged articles becomes possible along with the recent spread of hologram production techniques.

Meanwhile, as one example of a technique related to a liquid crystal film, Japanese Unexamined Patent Application Publication No. Sho 63-51193 (Document 1) discloses a card comprising a film located at at least a portion of a surface of the card, the film being made of a cholesteric liquid crystal polymer and having a fixed cholesteric liquid crystal structure. A method using such a cholesteric liquid crystal film is excellent in preventing forgery. This is because two characteristics of a cholesteric liquid crystal, that is, selective reflectivity and circular polarization selectivity, can be incorporated into a medium as information for authentication, and because it is difficult to fix a cholesteric liquid crystal with high mass-productivity. Meanwhile, Japanese Unexamined Patent Application Publication No. Hei 8-43804 (Document 2) discloses an optical component comprising a laminar structure formed of an alignment layer on a base member and an anisotropic layer in contact with the alignment layer, the anisotropic layer being formed of cross-linked liquid crystal monomers, and the base member including a mirror surface or a scattering reflection member. This specification discloses a method using an optically anisotropic nematic liquid crystal and the like. Although these liquid crystal films are difficult to forge, these liquid crystal films are also difficult for implementers themselves to produce in quantity. For this reason, these liquid crystal films have not been widely used as authentication media.

### Disclosure of the Invention

The present invention has been made in consideration of the above-described problems in the conventional techniques. An object of the present invention is to provide a latent image forming film that is rich in design and difficult to forge and that allows visual and mechanical authentication to be conducted easily, and also to provide a latent image identifying kit and a method for identifying a latent image using these.

The present inventers have earnestly studied in order to achieve the above object. As a result, the inventors have revealed the following facts, and completed the present invention, that is, a latent image forming film comprising: a reflective layer; and a polarization converting and rotating layer placed on a surface of the reflective layer, the polarization converting and rotating layer changing an ellipticity of polarized incident light and concurrently rotating a polarization direction of the polarized incident light. Specifically, the latent image forming film is rich in design and difficult to forge, since the latent image forming film can incorporate two characteristics: a characteristic of changing the ellipticity of polarized incident light; and a characteristic of rotating the polarization direction of the polarized incident light, into a single medium as information for authentication. Moreover, such a latent image forming film allows visual and mechanical authentication to be conducted easily by using a linear polarizing plate.

In a word, a latent image forming film of the present invention comprises: a reflective layer; and a polarization converting and rotating layer placed on a surface of the reflective layer, the polarization converting and rotating layer changing an ellipticity of polarized incident light and concurrently rotating a polarization direction of the polarized incident light.

In addition, in the latent image forming film of the present invention, the polarization converting and rotating layer preferably contains liquid crystal molecules fixed so as to have a twisted nematic orientation structure.

Furthermore, in the latent image forming film of the present invention, the polarization converting and rotating layer is preferably a layer obtained by orienting a high-molecular-weight liquid crystal having a glass transition temperature of 70°C or more so as to have a twisted nematic orientation in a liquid crystal state, and then by fixing the high-molecular-weight liquid crystal.

Furthermore, in the latent image forming film of the present invention, a helical pitch of a helical structure of the twisted nematic orientation structure is preferably 2 µm or more, and a number of pitches of the helical structure is preferably less than 2.

Furthermore, in the latent image forming film of the present invention, an optical twist angle of the polarization converting and rotating layer preferably ranges from 85 to 275°, and an optical retardation of the polarization converting and rotating layer preferably ranges from 450 to 700 nm.

Furthermore, in the latent image forming film of the present invention, an optical twist angle of the polarization converting and rotating layer preferably ranges from 265 to 365°, and an optical retardation of the polarization converting and rotating layer preferably ranges from 750 to 1100 nm.

A latent image identifying kit of the present invention comprises: the latent image forming film; and an identification tool formed of a plurality of linear polarizing plates that have absorption axis directions different from each other.

A method for identifying a latent image of the present comprises the steps of: observing a plurality of wavelengths of light beams of a latent image, the plurality of wavelengths of light beams being observed through a plurality of linear polarizing plates which form an identification tool being placed on the latent image forming film according to claim 1, and which have absorption axis directions different from each other; and identifying the latent image according to a combination of the wavelengths of the light beams of the latent image.

Note that, in the present specification, the twisted nematic orientation structure refers to an orientation structure in which the direction of the symmetry axis of the liquid crystal molecules is aligned spontaneously in a certain direction to exhibit macroscopic anisotropy, and the liquid crystal molecules assume a helical structure with the layer normal line direction taken as the screw axis. In addition, the orientation structure being referred to as the twisted nematic orientation structure almost satisfies the Mauguin condition and causes no Bragg reflection of visible light. A twisted nematic liquid crystal phase is clearly distinguished from a cholesteric liquid crystal phase in Liquid Crystal Dictionary (edited by Liquid Crystal Section, The 142nd Committee for Organic Materials for Information Science, Japan Society for the Promotion of Science, published by Baifukan Co., Ltd., ISBN 4-563-03453-3) since they exhibit different optical characteristics from each other. Similar to this, the twisted nematic orientation structure in the present specification is clearly distinguished from the cholesteric orientation structure. Specifically, the cholesteric orientation structure has a helical pitch of the helical structure almost equivalent to the wavelength of the visible light (400 to 800 nm) and is capable of causing the Bragg reflection of the visible light. In contrast, the twisted nematic orientation structure almost satisfies the Mauguin condition and causes no Bragg reflection of the visible light. For example, the twisted nematic orientation structure is a structure in which the helical pitch of the helical structure is 2 µm or more and in which the number of pitches of the helical structure is less than 2.

Meanwhile, in the present specification, the helical pitch represents the length in the layer normal line direction, the length being necessary for the liquid crystal molecules in the polarization converting and rotating layer to rotate once (360° revolution) with the layer normal line direction taken as the screw axis. The number of pitches represents the total number of the helical pitch in the normal line direction included in the polarization converting and rotating layer.

According to the present invention, it is possible to provide a latent image forming film that is rich in design and difficult to forge, and that allows visual and mechanical authentication to be conducted easily. It is also possible to provide a latent image identifying kit and a method for identifying a latent image using these.

### Brief Description of the Drawings

Fig. 1 is a photograph showing a state where unpolarized light is reflected by a latent image forming film of the present invention.
Fig. 2 is a photograph showing a state where light of a latent image is formed by placing an identification tool, which is formed of multiple linear polarizing plates having different absorption axis directions different from each other, on the latent image forming film of the present invention.
Fig. 3 is a graph showing a relationship between a range where the light of a latent image has a vivid color expression as well as the retardation and twist angle of a twisted nematic liquid crystal film.

### Detailed Description of the Preferred Embodiments

Hereinafter, the present invention is described in details with reference to preferred embodiments thereof.

First, a latent image forming film of the present invention is described. The latent image forming film of the present invention comprises: a reflective layer; and a polarization converting and rotating layer placed on a surface of the reflective layer, the polarization converting and rotating layer changing an ellipticity of polarized incident light and concurrently rotating a polarization direction of the polarized incident light.

The reflective layer according to the present invention reflects light incident from the polarization converting and rotating layer to be described later. A material of such a reflective layer is not particularly limited as long as the material can reflect light. Examples of material include metals such as aluminum, silver, gold, chromium, nickel, and tin; dielectric materials such as ITO (indium-doped tin oxide), ZnO (zinc oxide), Al₂O₃ (alumina), SiO or SiO₂ (silica), ZnS (zinc sulfide) and TiO₂ (titania). Meanwhile, the reflective layer to be used may have a pattern or the like on the layer surface or inside the layer. For example, a holographic film, a diffraction grating, a dielectric material multilayer film, and a dielectric material-metal multilayer film may be used.

The polarization converting and rotating layer according to the present invention is placed on the surface of the reflective layer. The polarization converting and rotating layer changes the ellipticity of polarized incident light and concurrently rotates the polarization direction of the polarized incident light. The latent image forming film of the present invention includes such a polarization converting and rotating layer. As a result, the latent image forming film is rich in design and difficult to forge and allows visual and mechanical authentication to be conducted easily. In other words, when a linear polarizing plate is placed on the surface of the latent image forming film of the present invention, natural light (unpolarized light) is converted into polarized light through the linear polarizing plate, and is incident on the polarization converting and rotating layer. Then, the polarized light incident from the polarization converting and rotating layer is reflected by the reflective layer. The reflected light exits from the polarization converting and rotating layer. Meanwhile, when the polarized light passes through the polarization converting and rotating layer, the ellipticity of the polarized light changes and concurrently the polarization direction of the polarized light rotates. As a result, the light exiting from the polarization converting and rotating layer is observed as light having a certain wavelength through the linear polarizing plate, that is, as light of the latent image. Furthermore, when the linear polarizing plate placed on the surface of the latent image forming film is rotated, light beams of the latent image having various wavelengths depending on the absorption axis directions of the linear polarizing plate are observed.

The latent image forming film of the present invention can be authenticated by utilizing the phenomenon in which light beams of the latent image having various wavelengths that depend on the absorption axis direction of the linear polarizing plate can be observed as in the above-described manner. Moreover, such light of the latent image has a specific wavelength, and thus can be visually observed as a color. Therefore, visual and mechanical authentication can be conducted easily.

In addition, such light of a latent image is rich in design, since the light of a latent image can be designed in various manners by appropriately selecting the degree of change in ellipticity of polarized incident light and the degree of the rotation of the polarization direction of the polarized incident light. Meanwhile, suppose that the latent image forming film of the present invention is observed under natural light (unpolarized light). The ellipticity of each polarized light beam in the unpolarized light is changed, and the polarization direction of each polarized light beam is rotated. However, unpolarized light is characterized by a series of waves having planes of vibration facing all the directions. Thus, the presence of the latent image cannot be recognized normally. Therefore, the latent image forming film of the present invention is rich in design and is difficult to forge.

In the present invention, the polarization converting and rotating layer preferably includes liquid crystal molecules fixed so as to form a twisted nematic orientation structure. In addition, in the polarization converting and rotating layer, the helical pitch of the helical structure in the twisted nematic orientation structure is preferably 2 µm or more (preferably in a range of 2 to 30 µm), and the number of pitches of the helical structure is preferably less than 2 (preferably in a range of 0.15 to 1). If the helical pitch is less than 2 µm, the Mauguin condition is not satisfied, resulting in a tendency that rotation (optical rotation effect), which is necessary for the present invention, of polarization direction of polarized light cannot be obtained, and a tendency that diffraction of visible light is caused by the Bragg reflection. Meanwhile, if the number of pitches exceeds 2, there arise tendencies that it becomes difficult to measure and to industrially control the number of pitches, and that vivid color expression, which is an object of the present invention, of a latent image is less likely to be obtained.

Meanwhile, in the present invention, it is possible to adjust the degree of change in ellipticity of polarized incident light and the degree of the rotation of the polarization direction of the polarized incident light by appropriately selecting the optical twist angle and the optical retardation of such a polarization converting and rotating layer. Note that such an optical twist angle represents the twist angle of the liquid crystal molecules relative to a screw axis that is the layer normal line direction of the polarization converting and rotating layer. Meanwhile, such optical retardation (And) represents a parameter expressed as a product of the thickness (d) of the polarization converting and rotating layer and the birefringence (An). Note that the birefringence (Δn) described herein represents a value (Δn = nₑ - nₒ) obtained by subtracting an ordinary refractive index (nₒ) from an extraordinary refractive index (nₑ).

When the optical twist angle of the polarization converting and rotating layer is in a range from 85 to 275°, the optical retardation of the polarization converting and rotating layer is preferably in a range from 450 to 700 nm. When the optical retardation is in the above range, the light of a latent image tends to have a vivid color expression, resulting in a tendency that especially visual latent image identification becomes easier.

Meanwhile, when the optical twist angle is in a range from 265 to 365°, the optical retardation is preferably in a range of 750 to 1100 nm. If the optical retardation is in the above range, the light of a latent image tends to have a vivid color expression, resulting in a tendency that especially visual latent image identification becomes easier.

As a method for producing such a polarization converting and rotating layer, adoptable is, for example, a method in which: a solution containing a liquid crystal material is applied onto an alignment substrate, the liquid crystal material is oriented so as to have a twisted nematic orientation in a liquid crystal state, and the orientation structure of liquid crystal molecules is fixed. Meanwhile, as the liquid crystal material, any of a high-molecular-weight liquid crystal and a low-molecular-weight liquid crystal can be used, as long as the liquid crystal molecules can take the twisted nematic orientation structure. In addition, an example of a method for fixing the orientation structure of liquid crystal molecules as described above is a method in which: a liquid crystal material is oriented to have a twisted nematic orientation in a liquid crystal state, and then cooled, in a case where a high-molecular-weight liquid crystal having a glass transition temperature of 70 °C or more is used as the liquid crystal material. Meanwhile, when a low-molecular-weight liquid crystal is used as the liquid crystal material, an example is a method in which: a liquid crystal material is oriented to have a twisted nematic orientation in a liquid crystal state, and then cross-linked by, for example, energy ray irradiation.

Examples of such a high-molecular-weight liquid crystal include main chain polymer liquid crystals such as polyester, polyamide, polycarbonate, and polyimide liquid crystals; and side chain polymer liquid crystals such as polyacrylate, polymethacrylate, polymalonate, and polysiloxane liquid crystals. Meanwhile, the suitable examples of the structural unit of such polymers include an aromatic or aliphatic diol unit, an aromatic or aliphatic dicarboxylic acid unit, and an aromatic or aliphatic hydroxycarboxylic acid unit.

Meanwhile, examples of such a low-molecular-weight liquid crystal include a liquid crystal compound obtained by introducing a reactive functional group to a terminal of any of a saturated benzenecarboxylic acid derivative, an unsaturated benzenecarboxylic acid derivative, a biphenylcarboxylic acid derivative, an aromatic oxycarboxylic acid derivative, a Schiff base derivative, a bisazomethine compound derivative, an azo compound derivative, an azoxy compound derivative, a cyclohexane ester compound derivatives and a sterol compound derivative; and a composition obtained by adding a cross-linking compound to a liquid crystal compound among the aforementioned compound derivatives.

Moreover, when the orientation structure formed in a liquid crystal state is fixed by thermal-cross-linking or photo-cross-linking, it is preferable to include a liquid crystal material having a functional group or a moiety that can undergo a cross-linking reaction by heat or light. Examples of such a functional group include an acrylic group, a methacrylic group, a vinyl group, a vinyl ether group, an allyl group, an allyloxy group, an epoxy group such as a glycidyl group, an isocyanate group, an isothiocyanate group, an azo group, a diazo group, an azide group, a hydroxyl group, a carboxyl group, and a lower ester group. An acrylic group and a methacrylic group are particularly preferable. In addition, examples of the cross-linkable moiety include a moiety containing such a molecular structure as maleimide, maleic anhydride, cinnamic acid, a cinnamic acid ester, an alkene, a diene, an allene, an alkyne, an azo, an azoxy, a disulfide, or a polysulfide. The cross-linking group and the cross-linking reaction moiety may be included in a liquid crystal substance itself constituting the liquid crystal material; alternatively, a separate non-liquid crystal substance having the cross-linkable group or moiety may be added into the liquid crystal material.

Meanwhile, a solution containing such a liquid crystal material preferably further contains an optically active compound for orienting the liquid crystal molecules in a liquid crystal state so as to have a twisted nematic orientation structure. Examples of such an optically active compound include optically active low-molecular weight compounds and optically active high-molecular-weight compound. Any optically active compound can be used in the present invention; however, an optically active liquid crystal compound is desirable from the viewpoint of compatibility with the high-molecular-weight liquid crystal.

Meanwhile, the solution containing the liquid crystal material may be added with a generally-known surfactant, as appropriate, in order to facilitate application of the solution. Furthermore, the solution containing the liquid crystal material may be mixed with a cross-linking agent, such as a bisazide compound and glycidyl methacrylate, or other compounds to improve heat resistance or the like of a liquid crystal film to be obtained, as long as expression of the liquid crystal phase is not disturbed. Then, the liquid crystal material can be cross-linked in a later step.

A solvent used for preparing such a solution containing a liquid crystal material is not particularly limited. Examples of the solvent include halogenated hydrocarbons such as chloroform, dichloroethane, tetrachloroethane, trichloroethylene, tetrachloroethylene, ortho-dichlorobenzene, a mixture solvent thereof with a phenol, and polar solvents such as dimethylformamide, dimethylacetamide, dimethyl sulfoxide, N-methylpyrrolidone, sulfolane, and cyclohexane. These solvents can be suitably selected for use in accordance with the kind or the like of the liquid crystal material used, and may be appropriately mixed for use, as needed. The concentration of such a solution can be selected as appropriate in accordance with the molecular weight, solubility, and the like of the liquid crystal material.

Meanwhile, as the alignment substrate, a film made of polyimide, polyamide, polyamide imide, polyphenylene sulfide, polyphenylene oxide, poly ether ketone, poly ether ether ketone, poly ether sulfone, polysulfone, polyethylene terephthalate, polyethylene naphthalate, polyarylate, triacetyl cellulose, an epoxy resin, a phenol resin, or the like, or a uniaxially oriented film of any of these films can be used. Some of these films exhibit sufficient abilities to orient a liquid crystal material without an additional treatment for expressing orientation abilities, depending on how the films are produced; however, in a case of insufficient orientation abilities or no orientation abilities, a film to be used may be subjected, as appropriate, to a treatment such as: an stretching treatment under moderate heating; a so called rubbing treatment of rubbing the film surface with a rayon fabric or the like in one direction; a rubbing treatment of providing, on the film, an alignment film formed of a generally-known alignment agent such as polyimide, polyvinyl alcohol, or a silane coupling agent; an obliquely vapor-depositing treatment with silicon oxide or the like; and an appropriate combination of these treatments, as needed.

The application method is not particularly limited, as long as the application method secures the uniformity of an applied film. A generally-known method can be adopted as appropriate. Examples of such an application method include a roll coating method, a die coating method, a dip coating method, a curtain coating method, a spin coating method, and the like. In addition, after the application, a solvent removing (drying) process by a heater or by a method of blowing hot air may be performed.

After the liquid crystal molecules are fixed onto the alignment substrate, the polarization converting and rotating layer (hereinafter referred to as a "twisted nematic liquid crystal film" in certain cases) can be obtained by: a method of mechanically peeling the polarization converting and rotating layer from the alignment substrate at the interface therebetween by use of a roll or the like; a method in which, after immersion into a poor solvent for all structural materials, the polarization converting and rotating layer is mechanically peeled; a peeling method in which ultrasound is applied in a poor solvent; a peeling method in which temperature is changed utilizing the difference in thermal expansion coefficient between the alignment substrate and the polarization converting and rotating layer; a method in which the alignment substrate itself or the alignment film on the alignment substrate is dissolved and removed; or the like.

Then, the polarization converting and rotating layer as described above is laminated onto the surface of the reflective layer. Thereby, the latent image forming film of the present invention is obtained.

Next, a latent image identifying kit of the present invention is described. The latent image identifying kit of the present invention comprises the latent image forming film, and an identification tool formed of a plurality of linear polarizing plates that have different absorption axis directions from each other.

The identification tool according to the present invention is formed of the multiple linear polarizing plates having different absorption axis directions. On the other hand, the latent image forming film of the present invention is authenticated as described above by utilizing a phenomenon that light beams of the latent image having various wavelengths that depend on the absorption axis direction of the linear polarizing plate can be observed. For this reason, when such an identification tool is placed on the latent image forming film, multiple light beams of the latent image can be observed simultaneously depending on the absorption axis directions of the multiple linear polarizing plates. In addition, the wavelength combination of the light beams of the latent image thus simultaneously observed is specific to the latent image forming film to be identified. Therefore, authentication is further easily conducted by a wavelength combination of light beams of the latent image.

Meanwhile, the number of linear polarizing plates of such an identification tool only needs to be 2 or more, and is not particularly limited. The absorption axis direction of the linear polarizing plate of such an identification tool is not particularly limited; however, particularly from the view point of facilitating visual latent image identification, the absorption axis direction is preferably determined as follows. Specifically, the wavelength of light of latent image may be observed in advance, the wavelength varying depending on the absorption axis direction of the linear polarizing plate. Then, the absorption axis direction may be determined so that the wavelength of light of the latent image can be a relatively easily and visually distinguishable color such as red, orange, yellow, yellowish-green, green, cyan, blue, and violet.

Next, a method for identifying a latent image of the present invention is described. The method for identifying a latent image of the present invention is a method comprising the steps of: observing a plurality of wavelengths of light beams of a latent image, the plurality of wavelengths of light beams being observed through a plurality of linear polarizing plates which form an identification tool being placed on the latent image forming film, and which have absorption axis directions different from each other; and identifying the latent image according to a combination of the wavelengths of the light beams of the latent image.

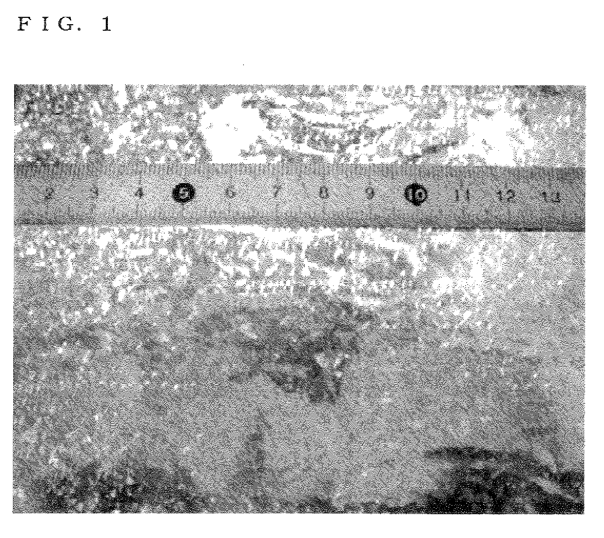

In the method for identifying a latent image, first, the latent image forming film as shown in Fig. 1 is prepared. As shown in Fig. 1, when the latent image forming film is observed under natural light (unpolarized light), the presence of the latent image cannot be recognized.

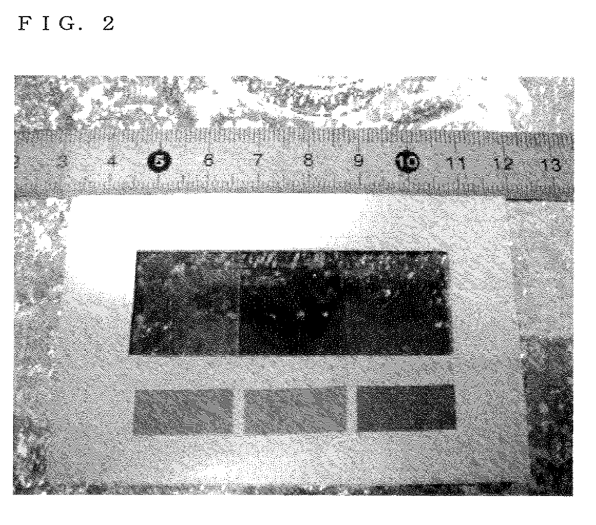

In the method for identifying a latent image, next, an identification tool made of multiple (for example, three) linear polarizing plates having different absorption axis directions from each other is placed on the latent image forming film as shown in Fig. 2. In this manner, multiple wavelengths (colors) of light beams of the latent image can be observed separately through the multiple linear polarizing plates. Note that the absorption axis directions of the linear polarizing plates in such an identification tool are pre-adjusted so that their respective wavelengths of light beams of the latent image can be a combination of green, blue, and red colors. As a result, on an authentic latent image forming film, a combination of green, blue and red is observed through the multiple linear polarizing plates as shown in Fig. 2. In this manner, according to the method for identifying a latent image of the present invention, authentication can be conducted according to a combination of wavelengths of light beams of a latent image.

### Examples

Hereinafter, the present invention is more specifically described on the basis of Examples. However, the present invention is not limited to Examples described below.

### (Test example 1)

The change in wavelength (change in color) of light of the latent image was examined by using a liquid crystal display device design simulator "LCD Master" manufactured by SHINTECH, Inc., in a case where the optical retardation and the optical twist angle of a layer (hereinafter referred to as a "twisted nematic liquid crystal film" in certain cases) containing liquid crystal molecules fixed so as to have a twisted nematic orientation structure were varied. Specifically, the twisted nematic liquid crystal film and an absorbing polarizing plate were sequentially placed on a reflection surface (a mirror surface). Thereafter, reflection spectrum obtained upon irradiation with an unpolarized light source (assuming a D65 light source) from above the polarizing plate was calculated, and plotted on a CIE x-y coordinate system. As for a liquid crystal material, used data was adjusted in a way that a birefringence wavelength dispersion value (a ratio of birefringences Δn at a wavelength of 450 nm and a wavelength of 590 nm (Δn(450)/Δn(590))) was 1.13 on the basis of physical property data of ZLI-2293 available from Merck KGaA. Meanwhile, EG1425DU manufactured by Sumitomo Chemical Co., Ltd. was used as the polarizing plate.

Then, reflection spectrum was calculated at the optical twist angle of the twisted nematic liquid crystal film ranging from 0 degrees to 360 degrees, and at the optical retardation thereof ranging from 0 nm to 1000 nm. In addition, for each combination of a twist angle and a retardation, the absorption axis of the polarizing plate was rotated from 0 degrees to 90 degrees. A color locus of reflection spectrum obtained in this case was plotted on an x-y coordinate system.

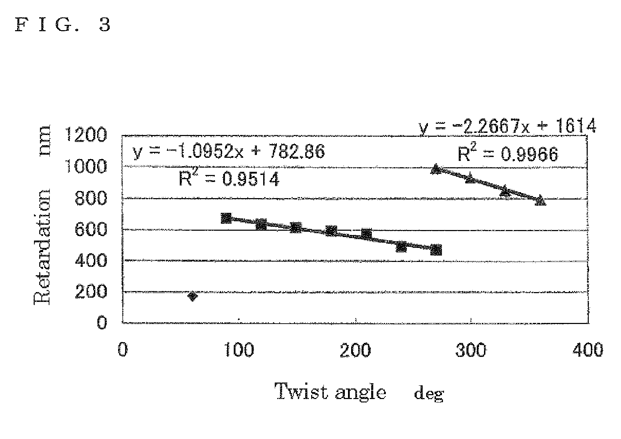

Incidentally, from the viewpoint of facilitating visual latent image identification by making the light of a latent image have a vivid color, plots of the color locus are preferably located at places greatly distant from the white point (0.3101, 0.3163) on the x-y coordinate system. In addition, the retardation and the twist angle are more preferably determined so that a circular color locus surrounding the white point can be obtained, since a locus circular around the white point provides various hues such as red, orange, yellow, yellowish-green, green, cyan, blue, and violet. Fig. 3 shows the results obtained by organizing the results of the above test from the viewpoints described above. As apparent from the results shown in Fig. 3, it was found out that, when the optical twist angle is in a range from 85 to 275°, the optical retardation is preferably in a range of 450 to 700 nm. It was also found out that, when the optical twist angle is in a range from 265 to 365°, the optical retardation is preferably in a range of 750 to 1100 nm.

### (Example 1)

While using aluminum foil (manufactured by SUMIKEI ALUMINUM FOIL CO., LTD., product name "my foil") as a reflective layer, and using a twisted nematic liquid crystal film (manufactured by NIPPON OIL CORPORATION, "NISSEKI LC film" series, the optical retardation at a wavelength of 590 nm: 500 nm, the optical twist angle: 240°) as a polarization converting and rotating layer, a latent image forming film of the present invention was formed in which the twisted nematic liquid crystal film was laminated on the aluminum foil.

Specifically, a transparent adhesive was pasted on a surface, in which a liquid crystal layer of the twisted nematic liquid crystal film was formed, by a laminator at a speed of 0.7 cm/minute so that no air bubbles were incorporated. Then, a protective film of the transparent adhesive was peeled off. The twisted nematic liquid crystal film was pasted on aluminum foil, which was cut into a rectangular shape of approximately 20 cm × 30 cm, by a laminator at a speed of 0.7 cm/minute so that no wrinkles were formed. Thus, the latent image forming film of the present invention was formed.

Next, a linear polarizing plate (manufactured by SANRITZ CORPORATION, product name "HLC2-5618") was prepared, and cut into three pieces in total each having a rectangular shape of 2 cm × 3 cm, so that the absorption axes of a linear polarizing plate for observing a green color, a linear polarizing plate for observing a blue color and a linear polarizing plate for observing a red color were +160°, +150°, and +25°, respectively. Then, these linear polarizing plates were arranged on a cardboard with an window of 2 cm × 6 cm formed therein, so that long sides of these linear polarizing plates were in contact with each other. Subsequently, these linear polarizing plates were sandwiched by a cardboard with a window having the same size as the above window, and fixed by pasting margins of the cardboards to each other. Thus, an identification tool was formed.

When the obtained latent image forming film was observed with naked-eyes, no color was seen except the reflection of the silver color of the aluminum foil, and thus no light of the latent image was observed. Next, the identification tool was placed on the latent image forming film so as to be brought into close contact therewith. Then, multiple light beams of the latent image were observed through the identification tool, and a combination of vivid green, blue and red colors was observed. Accordingly, it was proved that the latent image identifying kit of the present invention makes it possible to easily conduct visual and mechanical authentication.

### (Example 2)

A latent image forming film of the present invention was formed in a similar manner to Example 1, except that a commercially-available holographic decoration film was used as the reflective layer in place of the aluminum foil.

When the obtained latent image forming film was observed with naked-eyes, interference colors of the hologram as well as a silver color that is a base color of the hologram were observed in accordance with a pattern; however, no light of a latent image was observed. Next, a identification tool obtained as similar to Example 1 was placed on the latent image forming film so as to be brought into close contact therewith. Then, multiple light beams of the latent image were observed through the identification tool, and a combination of vivid green, blue and red colors was observed in addition to the pattern of the hologram. Accordingly, it was proved that the latent image identifying kit of the present invention makes it possible to easily conduct visual and mechanical authentication also when a hologram is used as the reflective layer.

### Industrial Applicability

As has described above, according to the present invention, it is possible to provide a latent image forming film that is rich in design and difficult to forge, and that allows visual and mechanical authentication to be conducted easily. It is also made possible to provide a latent image identifying kit and a method for identifying a latent image using these.
Therefore, the latent image forming film of the present invention is useful as an authentication medium for preventing forgery of objects, such as cards, gift certificates, tradable coupon, tickets, bills, passports, identification card, securities and betting tickets of publicly-run events.

## Claims

1. A latent image forming film comprising:
a reflective layer; and
a polarization converting and rotating layer placed on a surface of the reflective layer, the polarization converting and rotating layer changing an ellipticity of polarized incident light and concurrently rotating a polarization direction of the polarized incident light.

2. The latent image forming film according to claim 1, wherein the polarization converting and rotating layer contains liquid crystal molecules fixed so as to have a twisted nematic orientation structure.

3. The latent image forming film according to claim 1, wherein the polarization converting and rotating layer is a layer obtained by orienting a high-molecular-weight liquid crystal having a glass transition temperature of 70 °C or more so as to have a twisted nematic orientation in a liquid crystal state, and then by fixing the high-molecular-weight liquid crystal.

4. The latent image forming film according to claim 2, wherein
a helical pitch of a helical structure of the twisted nematic orientation structure is 2 µm or more, and
a number of pitches of the helical structure is less than 2.

5. The latent image forming film according to claim 1, wherein
an optical twist angle of the polarization converting and rotating layer ranges from 85 to 275°, and
an optical retardation of the polarization converting and rotating layer ranges from 450 to 700 nm.

6. The latent image forming film according to claim 1, wherein
an optical twist angle of the polarization converting and rotating layer ranges from 265 to 365°, and
an optical retardation of the polarization converting and rotating layer ranges from 750 to 1100 nm.

7. A latent image identifying kit comprising:
the latent image forming film according to claim 1; and
an identification tool formed of a plurality of linear polarizing plates that have absorption axis directions different from each other.

8. A method for identifying a latent image comprising the steps of:
observing a plurality of wavelengths of light beams of a latent image, the plurality of wavelengths of light beams being observed through a plurality of linear polarizing plates which form an identification tool being placed on the latent image forming film according to claim 1, and which have absorption axis directions different from each other; and identifying the latent image according to a combination of the wavelengths of the light beams of the latent image.
